# EUROPÄISCHE PATENTSCHRIFT

(11) **EP 2 337 871 B1**
(45) Veröffentlichungstag und Bekanntmachung des Hinweises auf die Patenterteilung: **10.04.2013**
(21) Anmeldenummer: 09778358.3
(22) Anmeldetag: 05.09.2009
(51) Int. Cl.: C21D 9/00, B21C 29/00

(54) **VORRICHTUNG ZUR ERWÄRMUNG STANGENARTIGER WERKSTÜCKE**
DEVICE FOR HEATING ROD-SHAPED WORKPIECES
DISPOSITIF POUR CHAUFFER DES PIÈCES DE TYPE BARRE

(30) Priorität: 22.09.2008 DE 202008012597 U
(43) Veröffentlichungstag der Anmeldung: 29.06.2011
(73) Patentinhaber: I. A. S. Induktions- Anlagen + Service GmbH & Co. KG, 58640 Iserlohn (DE); Extrutec GmbH, 78315 Radolfzell (DE)
(72) Erfinder: GÜNTER, Uwe, 78343 Gaienhofen (DE); BEER, Stefan, 58706 Menden (DE)
(74) Vertreter: Dörner, Kötter & Kollegen
(86) Internationale Anmeldenummer: PCT/EP2009/006462
(87) Internationale Veröffentlichungsnummer: WO 2010/031503

(56) Entgegenhaltungen:
- EP-A2- 1 736 556
- WO-A1-91/08089
- DE-C1- 3 222 940
- FR-A1- 2 284 847
- GB-A- 1 040 931
- JP-A- 60 082 244
- US-A- 5 337 768

## Beschreibung

Die Erfindung betrifft eine Vorrichtung zur Erwärmung von Alumimumstangen nach dem Oberbegrift des Anspruchs 1 (siehe z.B. FR-A-2284847).

Die prozesstechnischen Anforderungen der Temperaturführung bei der Erwärmung von Aluminiumbolzen sind in den letzten Jahren stetig gestiegen. Die richtige Bolzentemperatur ist von zentraler Bedeutung für einen wirtschaftlichen und qualitätsgerechten Strangpressbetrieb. Die Problematik des Anwärmprozesses unterscheidet heute in der Regel zwei Teilaufgaben: Die Erwärmung des Bolzens auf Presstemperatur und die Erzeugung eines axialen Blocktemperaturprofils (Taper), welches die Erwärmung während des Umformprozesses derart kompensiert, dass ein isothermer Pressprozess erreicht wird. Nach dem heutigen Stand der Technik stehen zur Erwärmung der Bolzen im Wesentlichen drei Alternativen zur Verfügung: Die brennstoffbeheizte Erwärmung mit integrierter Warmschere, die Bolzenerwärmung mit Induktionsanlagen sowie die kombinierte Bolzenerwärmung mit Gasschnellanwärmöfen und Induktionsanlagen.

Bei der brennstoffbeheizten Erwärmung lässt sich ein Temperaturprofil im abgescherten Bolzen mit Hilfe einer Kopfbeheizung erzeugen. Allerdings muss hier angemerkt werden, dass eine flexible und kurzfristige Sollwertänderung in der Praxis nicht zu realisieren ist. Bei der Erwärmung mit Induktionsanlagen ist der sogenannte Hochleistungsofen mit mehrlagiger Wicklung und mit mehreren axial angeordneten Heizzonen Stand der Technik. Dieser Anlagentyp hat allerdings den Nachteil, dass auf Grund der Leistungsdichteverteilung mit Verkürzung der Blocklänge der Durchsatz abnimmt.

Bei der kombinierten Bolzenerwärmung mit Gasschnellanwärmöfen und Induktionsanlagen findet zunächst eine Grunderwärmung mit einem konventionellen Mehrzonengasofen statt, während die definierte Feineinstellung der Temperatur mit einem mehrzonigen Induktionsofen erfolgt. Prinzipiell ist bei dieser Erwärmungsvariante die Prozesskette wie folgt gegliedert:
Die Aluminiumstangen sind in einem Blockmagazin je nach Legierungstyp eingelagert. Gemäß Prozessprogramm werden die Aluminiumstangen in dem Gasofen vorgewärmt und mit einer Warmblockschere auf die notwendige Blocklänge angepasst. Der so erwärmte und abgescherte Bolzen wird mittels gängiger Handhabungsmittel aus dem Gasofen entnommen und einem Induktionsofen zugeführt. Hier erfolgt die Feineinstellung auf die gewünschte Blocktemperatur mit axialen Temperaturgradienten. Die Anforderungen an den Gasofen fallen hier niedriger aus, da der Gasofen hier nur eine Grundtemperatur liefern muss, um das Warmscheren des Aluminiumblocks zu ermöglichen.

Nachteilig bei den vorgenannten Erwärmungsvorrichtungen ist, dass diese auf Grund des hohen erforderlichen Energieeinsatzes nur begrenzt wirtschaftlich sind. Zwar konnte durch das Prinzip einer Vorerwärmung des Stangenguts in dem Gasofen mit nachfolgender Scherung und der nachfolgenden Erwärmung des abgescherten Bolzens in einem Induktionsofen der Energieverbrauch gesenkt werden, jedoch gestaltet sich die Übergabe des vorgewärmten Bolzens als problematisch. Zum Einen findet hier eine unkontrollierbare Abkühlung des Bolzens statt, zum Anderen ist der Produktionsprozess durch die Beschickung der einzelnen Öfen sehr aufwendig.

Hier will die Erfindung Abhilfe schaffen. Der Erfindung liegt die Aufgabe zu Grunde, eine Vorrichtung zur Erwärmung von Aluminiumstangen zu schaffen, die eine kontinuierlich kontrollierte Erwärmung des Stangenmaterials ermöglicht und bei der der Handhabungsaufwand minimiert ist. Die Vorrichtung umfasst zwei hintereinander geschaltete Erwärmungsmodule, welche über ein Steuermodul miteinander gekoppelt sind, so dass eine durchgehende Erwärmungskammer gebildet ist, wobei das erste Erwärmungsmodul durch einen Gasofen und das zweite Erwärmungsmodul durch einen Induktionsofen gebildet ist.

So ist eine Vorrichtung zur Erwärmung stangenartiger elektrisch leitender Werkstücke geschaffen, die eine kontinuierlich kontrollierte Erwärmung des Stangenmaterials ermöglicht und bei der der Handhabungsaufwand minimiert ist. Das Stangenmaterial wird innerhalb des Gasofens vorgewärmt und - ohne, dass es eines weiteren Handhabungsprozess bedarf - in das zweite Enrvärmungsmodul gefördert, wo mittels eines Induktionsofens ein definierter Stangenbereich mit einem axialen Temperaturprofil beaufschlagt wird. Dieser Stangenbereich kann nachfolgend über eine Trennvorrichtung abgehängt werden.

Erfindungsgemäß weist der Induktionsofen wenigstens zwei Heizzonen auf, welche unabhängig voneinander regelbar sind. Hierdurch ist die Möglichkeit geschaffen, den Bolzen mit einem definierten axialen Temperaturprofil zu beaufschlagen.

Gemäß der Erfindung ist zwischen dem ersten und dem zweiten Erwärmungsmodul ein thermisches Entkopplungsmodul angeordnet. Hierdurch ist eine unkontrollierbare Wechselwirkung zwischen den beiden Enrvärmungsmodulen verhindert, wodurch die Kontrollierbarkeit des Erwärmungsprozesses erhöht ist.

Erfindungsgemäß ist das Entkopplungsmodul derartig ausgebildet, dass ein Flammenüberschlag vom ersten Erwärmungsmodul in das zweite Erwärmungsmodul verhindert ist.

Gemäß der Erfindung ist der Induktionsofen feldverteilerfrei ausgeführt. Da der Induktionsofen des zweiten Erwärmungsmoduls auf Grund des Durchlaufbetriebes immer vollständig gefüllt ist, ist es nicht erforderlich, abweichende Blocklängen zu kompensieren, wodurch der Einsatz von Feldverteilern entfallen kann. Hierdurch ist die Wirtschaftlichkeit der Vorrichtung erhöht.

Bevorzugt sind an dem zweiten Erwärmungsmodul Mittel zum Ablängen eines erwärmten Werkstücks angeordnet. Hierdurch ist eine In Process-Ablängung des Stangenbereichs mit einem definierten axialen Temperaturprofil mit anschließender Zuführung in den Pressbetrieb ermöglicht. Bevorzugt sind die Mittel zum Ablängen durch eine Warmschere oder eine Warmsäge gebildet.

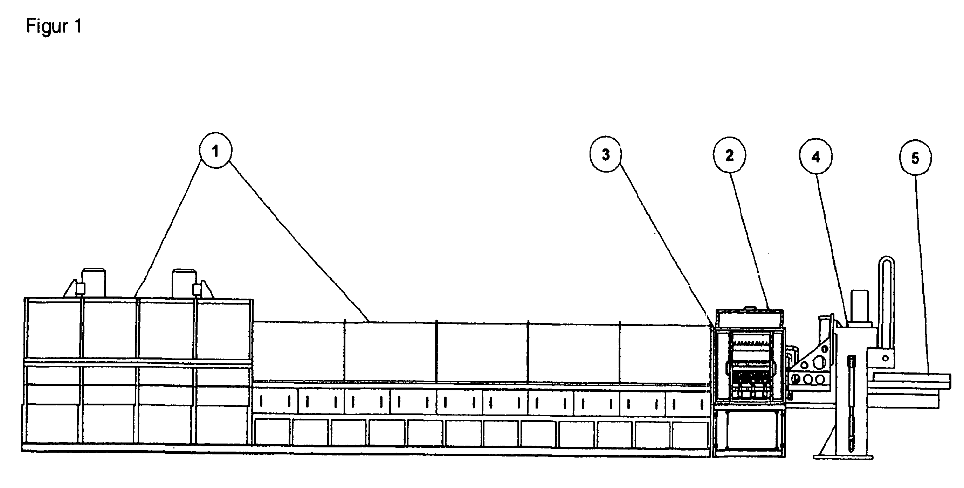

Ein Ausführungsbeispiel der Erfindung ist in der Zeichnung dargestellt und wird nachfolgend im Einzelnen beschrieben. Die einzige Figur zeigt die schematische Darstellung einer Vorrichtung zur Erwärmung stangenartiger elektrisch leitender Werkstücke.

Die als Ausführungsbeispiel gewählte Vorrichtung zur Erwärmung stangenartiger elektrisch leitender Werkstücke besteht im Wesentlichen aus einem Gasofen 1, der über einen thermischen Entkopplungsring 3 mit einem Induktionsofen 2 verbunden ist. An den Induktionsofen 2 schließt sich eine Warmschere 4 zur Ablängung eines Bolzens 5 an.

Der Gasofen 1 ist an seiner dem Induktionsofen 2 abgewandten Seite mit einem - nicht dargestellten - Wärmeschott versehen. Dieses Wärmeschott dient der Reduzierung von aus dem Ofen austretender Wärme.

Der Induktionsofen 2 ist ein sogenannter langer Induktionsofen mit integrierter Taperzone. Dieser Ofen entspricht grundsätzlich dem in der Vergangenheit eingesetzten Induktionsofen, der als Durchstoßofen arbeitet. Durch Integration von mehreren unabhängig regelbaren Heizzonen in die Auslaufzone wird die Möglichkeit geschaffen, einen Werkstückabschnitt mit einem axialen Temperaturprofil zu beaufschlagen. Gasofen 1 und Induktionsofen 2 sind über einen thermischen Entkopplungsring 3 miteinander verbunden. Der Entkopplungsring 3 ist derart ausgeführt, dass ein Flammenüberschlag vom Gasofen 1 in den Induktionsofen 2 verhindert ist. Durch den Gasofen 1 sowie den Induktionsofen 2 ist durchgehend ein - nicht dargestellter - Rollenförderer eingebracht, welcher eine kontinuierliche durchgängige Beschickung der Öfen 1, 2 ermöglicht.

Die Steuerung des Gasofens 1 und des Induktionsofens 2 erfolgt über ein - nicht dargestelltes - Steuerungsmodul, welches die Prozesstemperaturen in Abhängigkeit der jeweiligen Prozesszustände der beiden Öfen 1, 2 steuert.

An seiner dem Gasofen 1 entgegengesetzten Seite ist an dem Induktionsofen 2 eine Warmschere 4 angeordnet. Die Warmschere 4 ermöglicht eine definierte Ablängung eines mit dem gewünschten temperaturbeaufschlagten Bolzens 5 von dem in der Vorrichtung befindlichen erwärmten stangenartigen Werkstück.

Die erfindungsgemäße Vorrichtung verknüpft in einer durchgehenden Erwärmungskammer die kostengünstige Gaserwärmung als Grundlast mit einem mehrzonigen, leistungsstarken Induktionsofen für den Taperbetrieb. Durch Auslegung des Gasofens an einen Grundlastbetriebspunkt bewegt sich der Wirkungsgrad des Gasofens in einem optimierten Bereich. Der Induktionsofen dient nur zur Aufbringung eines axialen Temperaturgradienten. Damit liegt der Wirkungsgrad beim Gasofen um ca. 60 %, beim Induktionsofen bei ca. 66 %. Da der Induktionsofen immer gefüllt ist und somit abweichende Blocklängen nicht kompensiert werden müssen, werden Feldverteiler, wie sie bei Induktionsöfen des Standes der Technik erforderlich sind, nicht benötigt. Durch die Verlagerung von prozessbedingten Durchwärmzeiten in dem Warmscher- oder Warmsägezyklus können Prozessnebenzeiten verkürzt werden. Darüber hinaus entfällt die im Stand der Technik erforderliche aufwendige Förder- und Handhabungstechnik. Diese wird durch die innerhalb der Vorrichtung angeordnete Fördereinrichtung ersetzt. Beispielweise kann ein konventionelles Ladeschalensystem eingesetzt werden. Durch die wesentlich verkürzten Transportzeiten wird weiterhin ein geringerer Energieverlust durch Abstrahlung bewirkt. Die erfindungsgemäße Vorrichtung ermöglicht eine vollständig kontrollierbare Automatisierung der Bolzenerwärmung im Strangpressbetrieb.

## Patentansprüche

1. Vorrichtung zur Erwärmung von Aluminiumstangen, umfassend zwei hintereinander geschaltete Erwärmungsmodule, welche über ein Steuermodul miteinander gekoppelt sind, sodass eine durchgehende Erwärmungskammer gebildet ist, wobei das erste Erwärmungsmodul durch einen Gasofen (1) und das zweite Erwärmungsmodul durch einen Induktionsofen (2) gebildet ist, **dadurch gekennzeichnet, dass** das Steuerungsmodul die Prozesstemperaturen in Abhängigkeit der jeweiligen Prozesszustände der beiden Öfen steuert und dass zwischen dem ersten und dem zweiten Erwärmungsmodul ein thermisches Entkopplungsmodul angeordnet ist, welches derart ausgebildet ist, das ein Flammenüberschlag vom ersten Erwärmungsmodul in das zweite Erwärmungsmodul verhindert ist, und dass der Induktionsofen (2) feldverteilerfrei ausgebildet ist, wobei der Induktionsofen (2) wenigstens zwei Heizzonen aufweist, welche unabhängig voneinander regelbar sind, wodurch der Induktionsofen (2) derart ausgebildet ist, dass ein definierter Stangenbereich mit einem axialen Temperaturprofil beaufschlagbar ist.

2. Vorrichtung nach einem der vorgenannten Ansprüche, **dadurch gekennzeichnet, dass** an dem zweiten Erwärmungsmodul Mittel zum Ablängen eines erwärmten Werkstücks (5) angeordnet sind.

3. Vorrichtung nach Anspruch 2, **dadurch gekennzeichnet, dass** die Mittel zum Ablängen durch eine Warmschere (4) oder eine Warmsäge gebildet sind.

## Claims

1. Device for heating rod-shaped aluminium maternal, comprising two heating modules arranged in series and coupled to one another by a control module in such a way that a continuos heating chamber is formed, where the first heating module is formed by a gas-fired furnace (1) and the second heating module by an induction furnace (2), **characterised in that** the control module controls the prowess temperatures with preference to the status of the process in either furnace, and **in that** a thermal de-coupling modules is arranged between the first and the second heating modules,
which is designed in such a way that flames are presented from flashing over from the first to the second heating module, and that the induction furnace (2) is designed without field distributor, where the induction furnace (2) has at least two heating zones which are controller independently of one another, and where the induction furnace (2) is designed in such a way that an axial temperature profile can be applies to a defiled area of the rod.

2. Device according to any of the above claims **characterised in that** means of cutting off a heated workpiece (5) are arranged on the second heating module.

3. Device according to claim 2, **characterised in that** the means of cutting off a heated workpiece are formed by hot shears (4) or a hot saw.

## Revendications

1. Dispositif pour échauffer des barres en aluminium, comprenant deux modules d'échauffement montés en série et couplés entre eux via un module de commande de sorte à former une chambre d'échauffement continue, sachant que le premier module d'échauffement est formé par un four à gaz (1) et le deuxième module d'échauffement (2) par un four à induction, **caractérisé en ce que** le module de commande pilote les températures processuelles en fonction des états processuels respectifs des deux fours, et **en ce qu'**entre le premier et le deuxième module d'échauffement est agence un module de découplage thermique configuré de sorte à empêcheur la pénétration de flammes, provenant du premier module d'échauffement, dans le deuxième module d'échauffement, et **en ce que** le four à indiction (2) est configuré sans répartiteur de champs, sachant que le four à induction (2) présente au moins deux zones de chauffage réglables l'une indépendamment de l'autre, ceci faisant que le four à induction (2) est configuré de sorte à permettre de conférer un profil axial de température à un serment défini de barre.

2. Dispositif selon la revendication précédents, **caractérisé en ce que** sur le deuxième module d'échauffement sont agencés des moyens permettait de sectionneur une pièce (5) échauffée.

3. Dispositif selon la revendication 2, **caractérisé en ce que** les moyens permettant de sectionneur sont formés par une cisaille à chaud (4) ou une scie à chaud.
